(19) Europäisches Patentamt
European Patent Office
Office européen des brevets

(11) **EP 2 982 598 A2**

(12) **EUROPEAN PATENT APPLICATION**

(43) Date of publication:
**10.02.2016 Bulletin 2016/06**

(51) Int Cl.:
***B64C 3/18*** (2006.01)

(21) Application number: **15177127.6**

(22) Date of filing: **16.07.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **08.08.2014 US 201414455291**

(71) Applicant: **Airbus Americas Engineering, Inc.**
**Wichita, KS 67202 (US)**

(72) Inventor: **Pitman, Brian**
**Wichita, KS 67203 (US)**

(74) Representative: **Grey, Ian Michael et al**
**Venner Shipley LLP**
**200 Aldersgate**
**London EC1A 4HD (GB)**

(54) **LATERAL PLY LAYUP OF COMPOSITE SPAR**

(57) A structural component, including a composite tapered wing spar (1000) including a first fiber layer and a main web, wherein respective longitudinal axes (999) of fibers (1151) making up the first layer at least substantially lying on a plane corresponding to the main web of the wing spar (1000) are curved over at least most of the respective lengths of the fibers.

FIG. 10

Printed by Jouve, 75001 PARIS (FR)

**Description**

**BACKGROUND**

Structural components made from composite materials such as carbon fiber materials, can result in strength to weight ratios that exceed those of metal alloys. The aircraft industry is generally considered a pioneer in this area (commercial and/or military aircraft). Other types of vehicles utilize structural components made from composite materials (e.g. cars, boats etc.). Moreover, the composite structural components are utilized in other fields, such as the construction field.

The fabrication of structural components utilizing composite materials can be time-consuming. This is especially the case with respect to structural components that have compound curves and/or that are non-uniform, such as tapered structures. The fabrication of structural components utilizing composite materials can also be limited with respect to the establishment of certain compound curves / tapered shapes.

**SUMMARY**

In accordance with an exemplary embodiment, there is a structural component, comprising a composite tapered wing spar including a first fiber layer and a main web, wherein respective longitudinal axes of fibers making up the first layer at least substantially lying on a plane corresponding to the main web of the wing spar are curved over at least most of the respective lengths of the fibers.

In accordance with another exemplary embodiment, there is a method that comprises laying down a plurality of fibers in a first layer to form a composite spar, wherein the first layer has a first component that extends generally in a first plane and a second component that extends generally in a second plane and a third component that extends generally in a third plane such that a first transition zone between the first and second components extends in at least a first generally linear manner and such that a second transition zone between the second and third components extends in at least a second generally linear manner in a different direction than the first generally linear manner, wherein the method further comprises steering plies of the fibers of the first layer to be, at the first transition zone, effectively normal to the direction of extension of the first transition zone and to be, at the second transition zone, effectively normal to the direction of extension of the second transition zone.

In accordance with another exemplary embodiment, there is a structural component, comprising a composite tapered wing spar having a web and two flanges on opposite sides of the web, the composite tapered wing spar having a first fiber layer made up of plies that are effectively normal to directions of extensions of the respective flanges at respective transition zones of the flanges and web, wherein the directions of extensions of the respective flanges are obliquely angled relative to one another.

In accordance with another exemplary embodiment, there is an aircraft, such as by way of example only and not by way of limitation, corresponding to a commercial passenger aircraft having, by way of example only and not by way of limitation, transatlantic ocean capabilities, having a composite wing spar according to one or more of the teachings detailed herein.

In accordance with another exemplary embodiment, there is an apparatus configured to automatically manufacture structural components according to the teachings detailed herein having tapered bodies.

In accordance with another exemplary embodiment, there is an apparatus configured to automatically execute one or more of the methods detailed herein to automatically manufacture a structural component according to the teachings detailed herein.

In accordance with another exemplary embodiment, there is a composite tapered spar having a web and two flanges on opposite sides of the web, the composite tapered spar having a first fiber layer made up of a plurality of plies, wherein first plies of the plurality of plies have respective lengths that are substantially shorter than those of second plies of the plurality of plies, wherein the plies of the plurality of plies are arranged such that the first plies are generally evenly distributed amongst the second plies.

In accordance with another exemplary embodiment, there is a structural component, comprising a composite tapered wing spar having a web and two flanges on opposite sides of the web, the composite tapered wing spar having a first fiber layer made up of a plurality of plies, wherein the plies have respective longitudinal axes that are straight, wherein a first ply of the plurality of plies is effectively parallel to a respective direction of extension of one of the flanges at a first transition zone of the one flange and web, and wherein respective angles of the longitudinal axes of other plies relative to the direction of extension of the ply parallel to the one flange corresponds to about the following equation Angle = (Taper Angle) (Ply #) / (Total # Plies of First Fiber Layer - 1)), wherein "Taper Angle" is a taper angle of the wing spar, "Ply #" is an integer number of the respective ply that increases distance from the first ply, and "Total # Plies of the First Layer" corresponds to the total number of plies of the first layer.

## BRIEF DESCRIPTION OF THE DRAWINGS

Embodiments are described below with reference to the attached drawings, in which:

FIG. 1 is a bottom view of a portion of an exemplary aircraft according to an exemplary embodiment;

FIG. 2 is a front view of a portion of the exemplary aircraft according to FIG. 1;

FIG. 3 is an isometric view of an exemplary temper wing spar according to an exemplary embodiment;

FIG. 4 is a cross-section of the wing spar taken along the line 4-4 of FIG. 3;

FIG. 5 is a conceptual depiction of ply layers of a portion of the wing spar of FIG. 3;

FIG. 6 depicts a general axis system of the wing spar of FIG. 3;

FIG. 7 depicts an exemplary zero degree ply layer along the general axis;

FIG. 8 depicts another exemplary zero degree ply layer along the flange axes;

FIG. 9A depicts an exemplary ninety degree ply layer along the general axis;

FIG. 9B depicts a conceptual side view of the wing spar of FIG. 3 depicting the directions of plies for the layer depicted in FIG. 9A;

FIG. 10 depicts an alternate exemplary ninety degree ply layer normal to flange axes;

FIG. 11 depicts a conceptual side view of the wing spar of FIG. 3 conceptually detailing the direction of the ply of the layer of FIG. 10;

FIG. 12 depicts a conceptual side view of the wing spar of FIG. 3 depicting the directions of plies for the layer depicted in FIG. 10;

FIG. 13 depicts an alternate exemplary zero degree ply layer parallel to flanges;

FIG. 14 depicts a conceptual side view of the wing spar of FIG. 3 depicting the directions of plies for the layer depicted in FIG. 13;

FIG. 15 depicts an exemplary forty-five degree ply layer;

FIG. 16 depicts an alternate exemplary forty-five degree ply layer; and

FIG. 17 depicts an exemplar apparatus that is configured to manufacture composite materials detailed herein and/or variations thereof.

## DETAILED DESCRIPTION

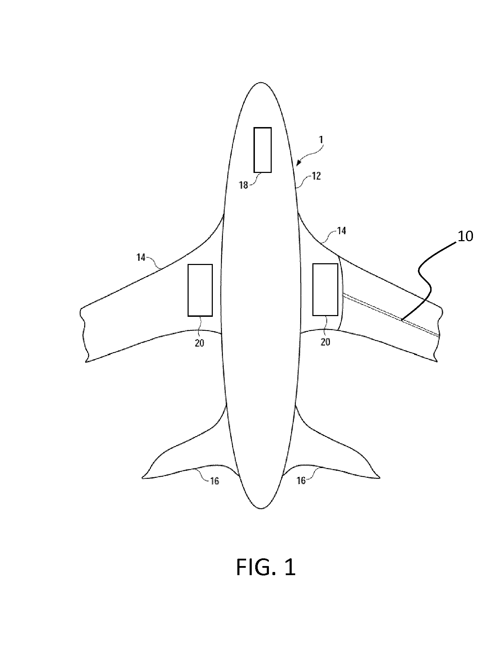

FIG. 1 is a bottom view of a schematic of an aircraft 1 which comprises a fuselage 12, wings 14 and a tail plane 16. Functionally depicted in FIG. 1 is a nose landing gear assembly 18 and two main landing gear assemblies 20, in reinforced nacelles at the roots of the wings 14.

FIG. 1 includes a "cutaway" view of one of the wings 14, where there is depicted a wing spar 10 in functional format. The spar extends from an inboard location of the wing 14 to an outboard location of the wing 14 (*i.e.,* from a first location of the wing to a second location of the wing, where the first location is closer to the fuselage 12 than the second location). In an exemplary embodiment, the wing spar 10 is a main spar that supports substantially all of the weight of the wing (at least when the aircraft is parked on a runway / not in the air). In alternate embodiments, the wing spar 10 is one a secondary spar (i.e., not a primary wing spar / main wing spar, a spar that does not serve as a primary wing spar) in the wing 14. In an exemplary embodiment, the wing spar 10, extends the full-length of the wing 14, while in alternate embodiments, the wing spar 10 extends a partial length of the wing 14, which may include extension from the root of the wing, from the tip of the wing, or from a first position in between the root and the tip of the wing to a second position in between the root and the tip of the wing.

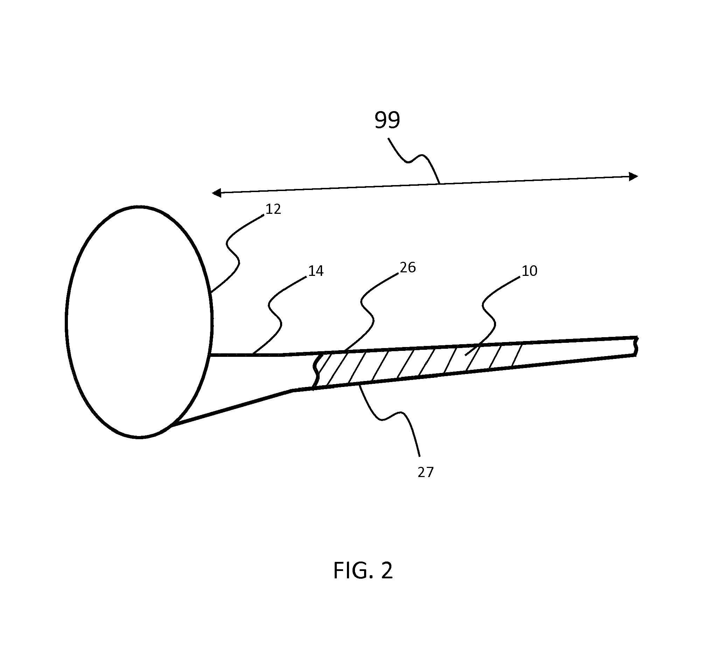

FIG. 2 depicts a front view of a portion of the aircraft 1 of FIG. 1, where a cutaway portion of one of the wings 14 is depicted, revealing a portion of spar 10. As can be seen, the wing 14 tapers from an inboard position to an outboard position. That is, the thickness of the wing (as measured in the vertical direction of FIG. 2 / the direction parallel to the direction of the pull of gravity when the aircraft is parked on a tarmac) decreases with location from inboard to outboard of the wing. Thus, the chord of the spar (as measured in the vertical direction of FIG. 2 / the direction parallel to the direction of the pull of gravity when the aircraft is parked on a tarmac) decreases with location from inboard to outboard of the wing. Accordingly, in an exemplary embodiment, the wing spar 10 also tapers in a similar and/or same manner (*e.g.,* a ratio of the height of the wing spar (as measured in the vertical direction) at two separate locations is at least about the same as the ratio of the thickness of the wing also at those locations). That said, in an alternate embodiment, the ratios can be different (i.e. the wing spar 10 does not taper in a similar manner as the wing).

It is noted at this time that the configurations of the exemplary wing spars detailed herein, as well as the uses thereof also detailed herein, are but exemplary and are presented for explanation purposes. The teachings detailed herein and/or variations thereof are applicable to any type of wing spar with which the teachings detailed herein and/or variations thereof can be utilized. Indeed, these teachings are not limited to only wing spars. Embodiments include applications of the teachings detailed herein and/or variations thereof to other types of spars other than wing spars and other types of structural components. For example, vertical tail spars, flap and aileron ribs, wing in-spar ribs, etc. Moreover, embodiments include applications directed to technologies outside the aerospace technologies (e.g., automotive, etc.). The teachings herein can be directed to any cantilevered structure.

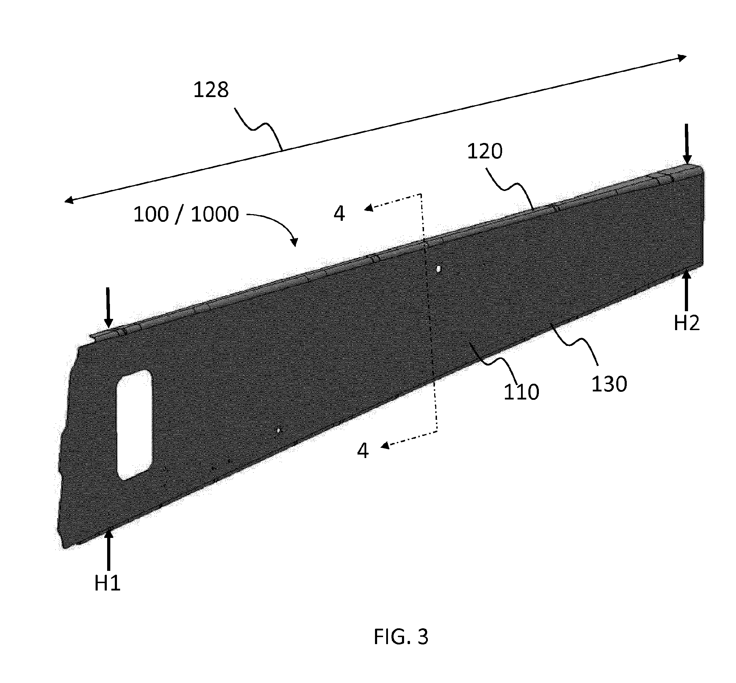

FIG. 3 depicts an isometric view of an exemplary wing spar 100 and 1000 (the different reference numerals corresponding to different design features of the different spars associated with the different reference numerals - FIG. 3 is representative of both), which can correspond to the wing spar 10 depicted in FIGs. 1 and 2. That is, the wing spar 100 depicted in FIG. 3 can be used as a wing spar (main wing spar or otherwise) in a wing of an aircraft (including a commercial aircraft, such as a commercial aircraft configured for trans ocean (e.g., trans-Atlantic travel). While FIG. 3 depicts an isometric view of the wing spar 100, it is noted that the tapering depicted in FIG. 3 is not due to drawing presentation techniques (more distant objects being smaller). That is, H1 is greater than H2 / the ratio of H1 to H2 is greater than 1.0. (In an alternate embodiment, the ratio of H1 to H2 can be less than 1.0. These dimensions are provided for purposes of presenting an exemplary framework in which the embodiments of the teachings detailed are applied in some exemplary embodiments.)

As can be seen, wing spar 100 includes a main web 110 and two flanges 120 and 130. For purposes of description, flange 120 is referred to as the upper flange and flange 130 is referred to as the lower flange. It is noted that this nomenclature is utilized only because of the way that the spar 100 is depicted in FIG. 3. In some embodiments, flange 120 may be a flange located on the bottom and flange 130 may be a flange located on the top (i.e. the spar as depicted in FIG. 3 is inverted).

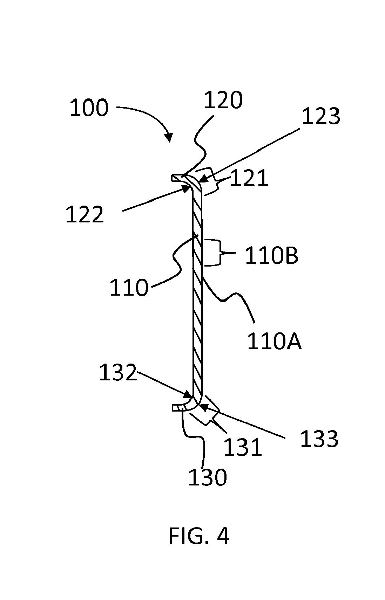

FIG. 4 depicts a conceptual cross-sectional view taken through the approximate longitudinal center of the spar 100 (as depicted by the cross-section symbol 4-4 of FIG. 3). The cross-sectional view of FIG. 4 is conceptual in that it presents components of the wing spar 100 in exaggerated form for illustration purposes only. That is, the actual cross-section of the wing spar 100 may be different in at least some embodiments.

As can be seen, the main spar web 110 is generally planar. That is, in an exemplary embodiment, the main spar web 110 is generally parallel to plane 110A. By "generally planar," it is meant that the overall geometry of the web 110 extends in a planar fashion despite the fact that there may be some contours / or slight curvature that exist that result from manufacturing the spar or that there may be a modicum of curvature of the web by design - in the totality, the web would be considered generally planar.

FIG. 4 includes the identifiers 121 and 131, which respectively correspond to transition zones of the flanges 120 and 130, respectively, where the spar transitions from the main web 110 to the planar portions of flanges 120 and 130. As can be seen from the drawing, the transition zones are zones where the flanges include curved radii that extend from the planar portions of the web 110. In an exemplary embodiment, these curved radii result from a change in direction of the layered composite materials that results from the manufacturing process that results in the establishment of the flanges that are connected to the web. In the embodiment of FIG. 4, the upper flange 120 includes an outer flange radius 123 and an inner flange radius 122, and the lower flange 130 includes an outer flange radius 133 and an inner flange radius 132. The outer radii begin, relative to the spar 110, at the portions of the transition zones 121 and 131 that are adjacent the web 110, respectively. The inner radii also begin at transition zones, which may be locally aligned with the transition zones 121 and 131, at least in the vertical direction (relative to FIG. 4), and or may be locally misaligned with the aforementioned transition zones, again at least in the vertical direction. For example, the radiuses can be about 1 inch to about 4 inches, etc.

In this regard, it is noted that the embodiments of the wing spar detailed herein are composite wing spars. By way of example only and not by way of limitation, in an exemplary embodiment, the composite wing spars are made up of layers of graphite fibers. Alternatively, the composite wing spars are made up of layers of glass fibers (fiberglass, Kevlar, etc.). Along these lines, it is noted that the aforementioned transition zones between the web and the flanges can be local to each layer. That is, in an exemplary embodiment, with respect to FIG. 4, the vertical location of a transition zone of one layer of fiber can be different than that of another layer of fiber.

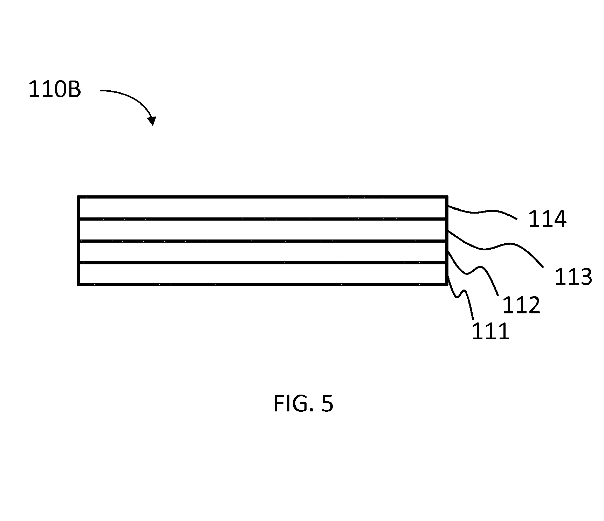

FIG. 5 depicts a conceptual view of a portion 110B of the wing spar 110. The portion corresponds to a portion at about the center of section of FIG. 4, as indicated in FIG. 4, rotated 90° in the counterclockwise direction (i.e., portion 110B has vertical orientations in FIG. 4 - it is presented horizontally in FIG. 5 for discussion purposes). As can be seen, in the exemplary embodiment, the portion 110B includes four fiber layers: layers 111, 112, 113 and 114. These layers are located one on top of the other (or more accurately, with respect to the frame of reference of FIG. 4, one beside the other). It is noted that embodiments of the wing spar can include more layers or fewer layers than that depicted in FIG. 5 (as noted above, FIG. 5 is presented for conceptual purposes).

In an exemplary embodiment, the layers of FIG. 5 represent layers of fiber material that are "laid up" at different fiber orientations relative to one another, although in alternate embodiments, the orientations of the fibers of one or more of the layers can be the same as the orientations one or more other layers.

In this regard, in an exemplary embodiment, the fiber layers comprise individual plies that make up bands of respective layers. In an exemplary embodiment, the layers are laid down utilizing automated fiber placement (AFP) machines. By way of example only and not by way of limitation, exemplary embodiments can include manufacturing actions which entails laying down 32 individual plies simultaneously or individually or in groups to make up bands (which may be 8 inch bands, 16 inch bands, etc.). In at least some exemplary embodiments, the direction of extension of the plies / the direction of the fibers making up the given layer are locally parallel to adjacent plies / fibers. In an exemplary embodiment, the composite plies are applied in a manner such that they follow the natural path over a compound surface (such as the surface of a tooling mold or a tooling die upon which the layers are stacked). The general vector of the portions of the fibers that make up the web defines the orientation of the fibers (even though the orientation of the fibers changes at the transition zones where the flanges begin). In this regard, plies that have a general longitudinal direction of extension vector parallel to the direction of the span wise length 128 (see FIG. 3) of the spar 100 (inboard to outboard direction or vice versa with respect to the wing) are referred to as zero angle plies, implies that the general vector perpendicular to the direction of the span wise length of the spar are referred to as ninety degree angle plies, etc.

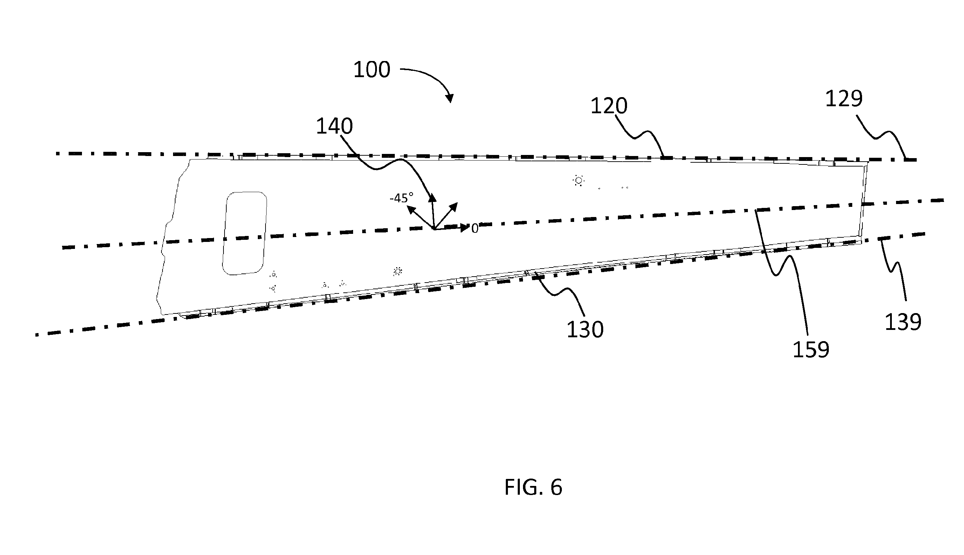

More particularly, with reference now to FIG. 6, in some embodiments, the orientations of the fibers of the fiber layers of the spar 100 are defined by what is referred to herein as a general axis system, represented by a first coordinate system 140. In an exemplary embodiment, the general axis system is such that the zero degree vector of the coordinate system is parallel to the vector average between the upper flange 120 and the lower flange 130. In FIG. 6, line 159 is the average of lines 129 and 139, the latter two lines being the vector average (which may be the exact vector if there is no deviation in the direction of extension of the flanges) of the upper and lower flanges, where the angle between the latter two lines is referred to as the taper angle (which can be about eight (8) degrees in an exemplary embodiment by way of example only and not by way of limitation).

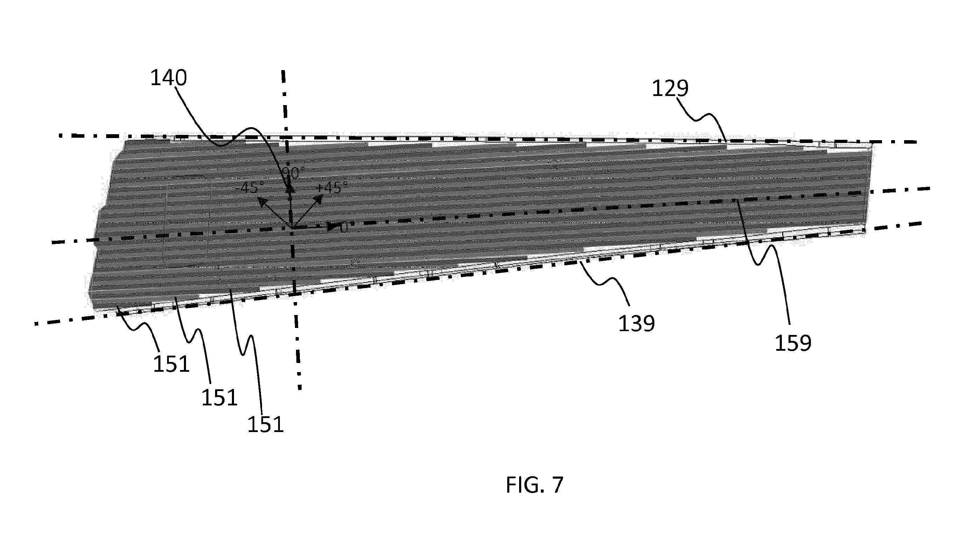

FIG. 7 depicts fibers having a 0° fiber orientation relative to the first general axis system (i.e., fibers that are parallel to the vector identified by the 0° symbol of the first coordinate system 140) and thus fibers that are parallel to the vector average between the upper flange 120 and the lower flange 130 (line 159 of FIG. 7). In an exemplary embodiment, FIG. 7 depicts a first layer (e.g., one of layers 111-114 of FIG. 5) of fibers made up of individual plies 151 (three of which are identified in FIG. 7).

As can be seen, the plies 151 adjacent to the upper and lower flanges do not extend the full length of the spar (the full span of the spar). In at least some exemplary embodiments, this is because the AFP machine is unable to lay 0° plies over the flange radii and/or because the skew angle would cause bunching of the plies / unacceptable stress on the plies.

With regard to the embodiment of FIG. 7, while all plies start at the root of the spar, these plies 151 end before reaching the tip of the spar. In at least some embodiments, there is utilitarian value in this owing to the fact that the spar is tapered, and this avoids the skewing that can occur owing to the radii that begin at the transition zone of the layer. However, it can be seen that this embodiment does not follow the ply's natural path at the flange radii. In some exemplary embodiments, there can be zones of weaknesses arrayed about the vector averages of the upper and/or lower flanges. Without being bound by theory, this can be because the plies end as shown in FIG. 7.

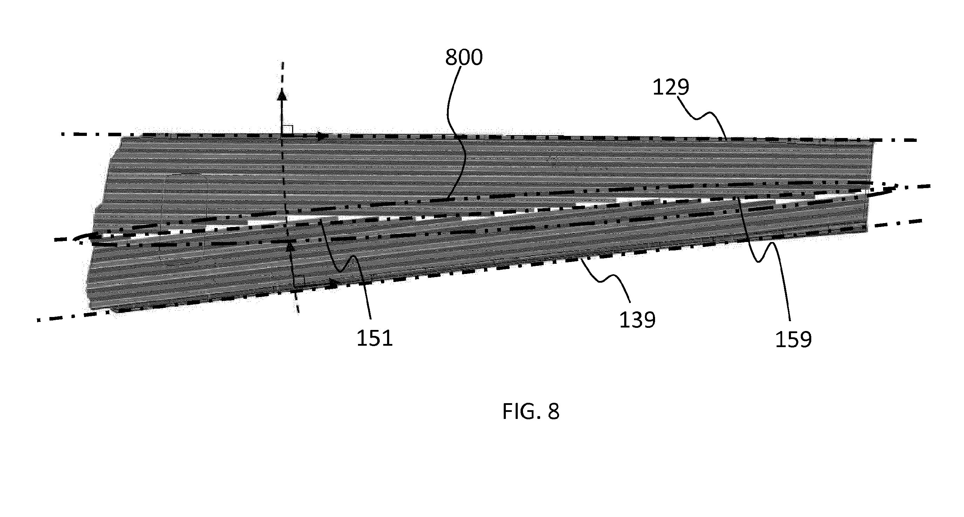

Conversely, FIG. 8 depicts an alternate arrangement of layer 111, with fibers having a 0° fiber orientation variously relative to 139 and 129. In an exemplary embodiment, the second general axis system is such that there are two zero degree vectors respectively parallel to the vector average of the upper flange 120 and the lower flange 130 (again, which may be the exact vector if there is no deviation in the direction of extension of the flanges). As can be seen, the plies 151 adjacent to the upper and lower flanges 120 and 130 extend the full length of the spar (the full span of the spar), but the plies 151 in the middle do not extend the full length of the spar. With regard to the embodiment of FIG. 8, while all plies start at the root of the spar, some plies 151 end before reaching the tip of the spar. In at least some embodiments, there is utilitarian value in this owing to the fact that the spar is tapered, and this allows the plies to follow their respective upper and lower flange orientations. However, without being bound by theory, as can be seen, because the plies that are arrayed about the vector average of the flanges (represented by line 159) do not extend the full length of the spar and end at locations approximately arrayed on the vector average, there can be a zone of weakness in the layer presented by FIG. 8 concentrated along the vector average (this is depicted by way of example as a zone within ellipse 800).

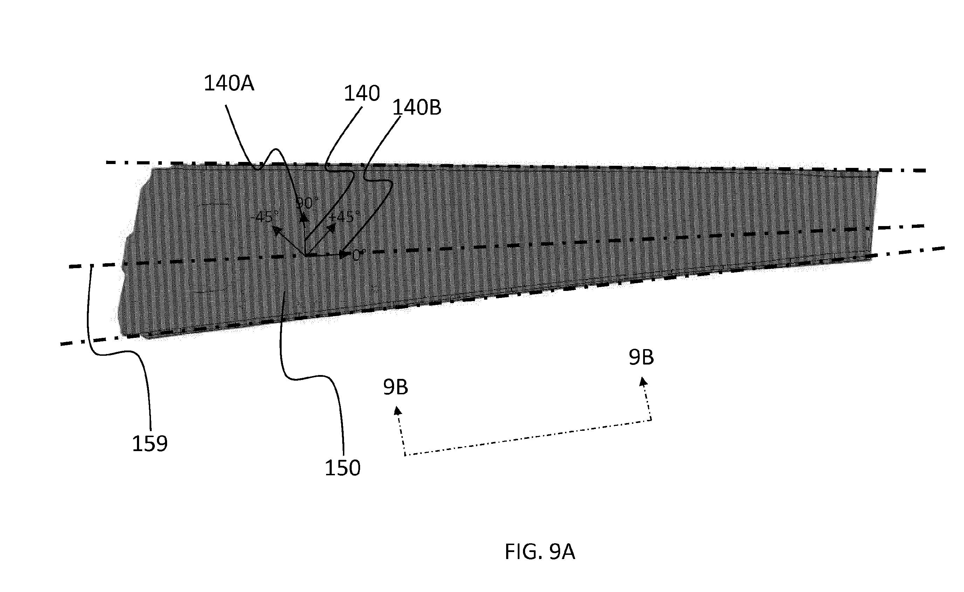

FIG. 9A presents an exemplary layer of the spar 110, and depicts fibers 150 having a 90° fiber orientation relative to the first general axis system (*i.e.*, fibers that are parallel to the vector identified by the 90° symbol 140A of first coordinate system 140 and perpendicular to the vector identified by the 0° symbol 140B of the first coordinate system 140) and thus fibers that are perpendicular to the vector average between the upper flange 120 and the lower flange 130 (line 159 of FIG. 9A). In the embodiment of FIG. 9A, the 90° plies obliquely skew to follow their natural path about the flange radii.

As noted above, the layers of the spar 100 can have fibers having different orientations. In this regard, while FIGs. 7 to 9A only variously depict zero degree fibers and ninety degree fibers (relative to the longitudinal direction of the spar). However, other layers 150 can have fibers angled at different degrees relative to the pertinent axis systems. By way of example only and not by way of limitation, fibers can be generally angled at $\pm$ 45°, $\pm$ 30°, $\pm$ 60°, etc., relative to the longitudinal axis of the system. In an exemplary embodiment, the fibers of any particular layer 150 can be angled at $\pm$ angles relative to the longitudinal direction of the spar in a range of 0 to 90 in 0.1 degree increments (e.g., +10, -7.6, $\pm$ 43.9°, - 89.0° to + 55.7°, etc.).

It is noted that the fibers of FIGs. 7-9A, can experience a situation where fiber skewing occurs at the upper and/or lower spar flange 120 / 130, thus resulting in zones where the spar is not as strong as that which would be the case in the absence of the fiber skewing. In an exemplary embodiment, the fibers 150 oriented based on the first general axis system 140 can be skewed relative to the spar flanges 120 / 130 by about half the taper angle of the spar (e.g., about 4° in embodiments where the taper angle the spar is 8°). In this regard, the skewing could result in one side of a ply strip being folded over upon itself and/or one side of a ply not adhering to the underlying layer.

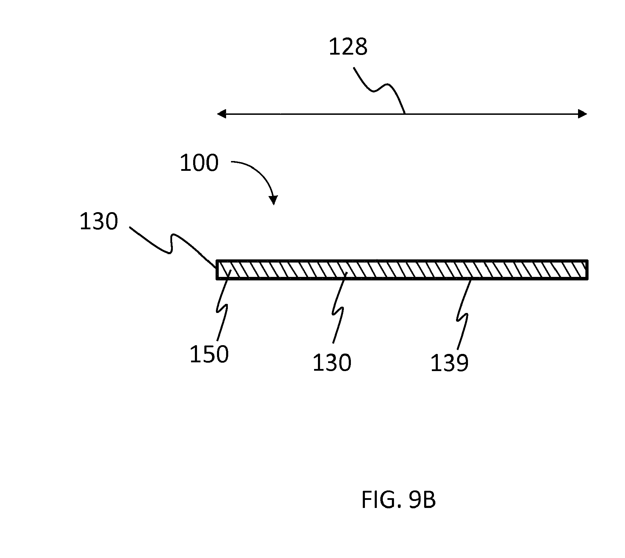

FIG. 9B depicts a conceptual view of a bottom view of a portion of the spar 100 detailing plies 150 of the layer of FIG. 9A. More specifically, FIG. 9B depicts the bottom flange 130, where the rest of the spar component is eclipsed by the bottom flange. FIG. 9B depicts the plies wrapping around the transition zone from the planar web of the spar extending therefrom to the edge 139 of the flange. As can be seen, the plies 151 extend at an oblique angle (depicted in an exaggerated manner for purposes of conceptual illustration) relative to the span wise direction of extension of the bottom flange 130 / the direction of extension of the edge 139. Thus, the local direction of extension of the plies 151 are skewed relative to the flange 130 span wise direction of extension 128 / relative to the direction of extension of the edge 139. It is noted that FIG. 9B also conceptually represents the arrangement of the plies of the top spar (i.e., if reference number 130 was replaced with reference number 120, FIG. 9B would represent a top view of a portion of the spar 1000 of FIG. 9A, albeit the relative direction of extension of the plies may be different).

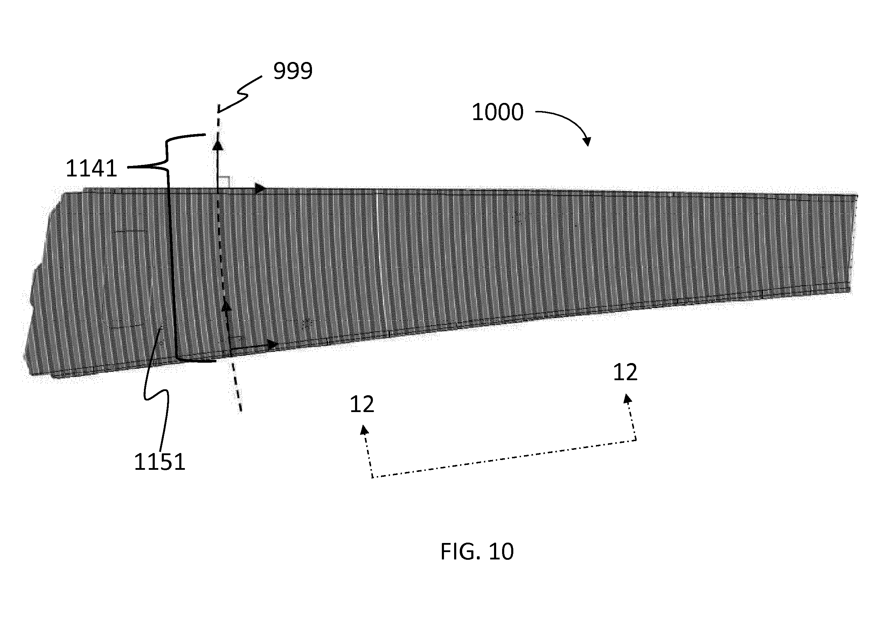

FIGs. 10 to 16 present alternate embodiments of fiber layers for a spar where the orientation of the fibers as variously referenced by numbers as will be detailed below and/or the spatial extent of the fibers are different than those detailed above. In this regard, there are embodiments of wing spars that have a fiber layer that does not have one or more or all of any of the features of FIGs. 7-9B.

Referring back to FIG. 3, which, as noted above, represents a wing spar 1000. Wing spar 1000 corresponds to wing spar 100, except that the ply orientations of one or more fiber layers are different, as will now be detailed. That is, while wing spar 100 utilizes fiber layers according to one or more or all of FIGs. 7-9B, wing spar 1000 utilizes fiber layer(s) corresponding to one or more of the features below. FIG. 10 depicts a layer of a composite tapered wing spar 1000 having a web 110 and two flanges 120 and 130 on opposite sides of the web (the outer geometry / overall geometry is basically identical, including identical, to the wing spar 100 detailed above - wing spar 1000 can be used as wing spar 100 in wing spar 10 of FIG. 1 and/or for any other uses of wing spar 100). As with spar 100, the directions of extensions of the respective flanges are obliquely angled relative to one another (e.g., as with spar 100, the angle between the direction of extension of the two flanges is 8°). However, as can be seen, the spar 1000 has a fiber layer made up of plies 1151 that are effectively normal to longitudinal directions of extensions of the respective flanges 120 and 130 at respective transition locations of the flanges and web, as indicated by the coordinate system 1141, which includes two zero degree vectors respectively parallel to the vector average of the upper flange 120 and the lower flange 130 (which may be the exact vector if there is no deviation in the direction of extension of the flanges).

More particularly, in an exemplary embodiment, the ply paths of the fibers are steered such that they follow the natural path about the flange radii, or at least steered to more closely follow their natural path about the flange radii relative to that which is the case with respect to FIG. 9A, and thus are normal to directions of extensions of the respective flanges / or at least normal to the directions of extensions of the local transition zones (or at least closer to normal relative to that which is the case with respect to FIG. 9A). In an exemplary embodiment, this can reduce and/or eliminate the fiber skewing noted above. In an exemplary embodiment, this can prevent the folding of a side of a ply strip over itself and/or separation of one layer from another layer at the transition zone.

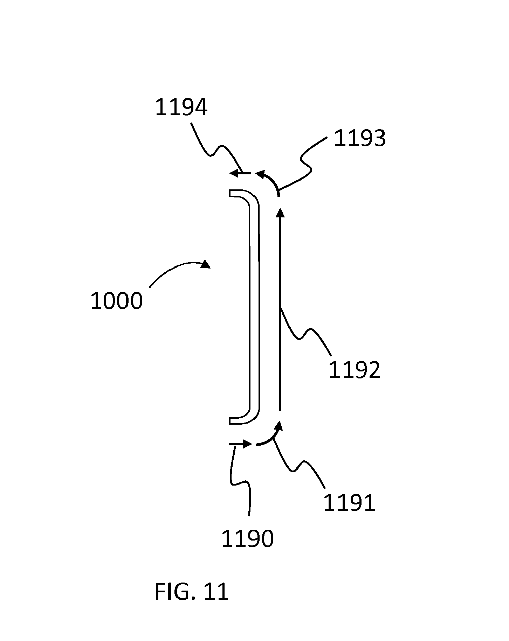

As can be seen from FIG. 10, the paths are curved as they arc from the bottom flange 130 to the top flange 120 (or visa-versa) across the plane of the web 110 of the spar 1000. In this manner, with reference to FIG. 11, which corresponds to FIG. 4 with different annotation thereon, the plies extend, as indicated by arrow 1190, from the edge of the bottom flange across the width thereof effectively at a normal angle relative to the edge of the bottom flange / relative to the spanwise direction of extension of the bottom flange. Then, as indicated by arrow 1191, the plies curve around the transition zone 131 to the web 110 of the spar 1000, again still effectively normal to the edge of the bottom flange 130 / effectively normal to the direction of extension of the bottom flange (or at least the respective transition zone). At the web portion of the spar, the plies extend in a generally planar manner across the web to the transition zone of the upper flange, as indicated by arrow 1192. However, as the plies extend across the web, the plies curve as exemplary shown in FIG. 10 (relative to the plane of the cross-section of FIG. 11, out from and/or into the plane of the figure / towards and/or away from the viewer of the figure) so that upon reaching the transition zone of the upper web, they are effectively normal to the direction of extension of the upper flange. As indicated by arrow 1193, the plies extend through the transition zone in a curving manner (relative to the plane of the cross-section of FIG. 11) but normal to the direction of span wise extension of the upper flange until reaching the planar portion of the upper flange, and then extends, as indicated by arrow 1194 to the edge of the upper flange, still normal to the direction of said span wise extension of the upper flange/normal to the edge of the upper flange.

It is noted that while the just-detailed embodiment has been described in terms of ply application (to a mold or to a previous layer of fiber, as the case may be) starting from the lower flange and ending at the upper flange, in an alternative embodiment, ply application begins at the upper flange and ends at the lower flange.

In an exemplary embodiment, because the plies (e.g. plies) follow the natural path of the flange radii, fiber skewing at the upper and/or lower spar flange is eliminated in some embodiments, or at least reduced relative to that which would be the case for the comparable global fiber orientation of the embodiment depicted in FIG. 9A.

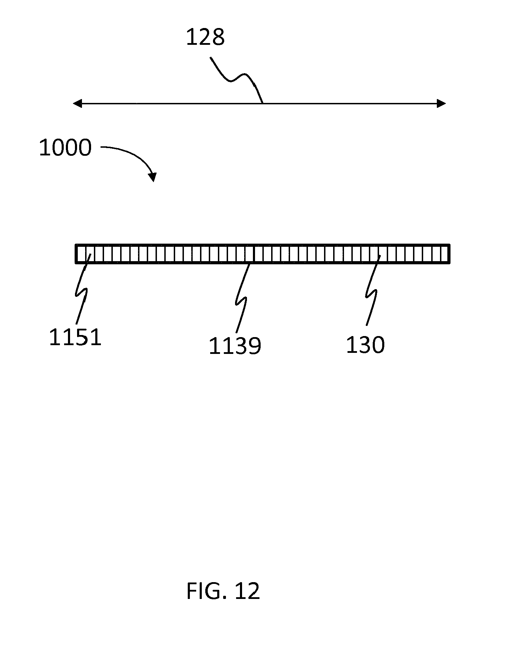

FIG. 12 depicts conceptual view of a bottom view of a portion of the spar 1000 detailing plies 1151 of FIG. 10. More specifically, FIG. 12 depicts a view looking from the bottom upwards towards the bottom flange 130, where the rest of the spar is eclipsed by the bottom flange. In this regard, FIG. 12 is comparable to FIG. 9B, save for the different orientation of the plies 1151 vs. plies 151. FIG. 12 depicts the plies wrapping around the transition zone from the planar web of the spar extending therefrom to the edge 1139 of the flange. As can be seen, the plies 1151 extend at a normal angle relative to the span wise direction of extension of the bottom flange 130 / the direction of extension of the edge 1139. Thus, the local directions of extension of the plies 1151 are effectively not skewed relative to the flange span wise direction of extension. It is noted that FIG. 12 also conceptually represents the arrangement of the plies of the upper flange (i.e., FIG. 12 also represents a top view of a portion of the spar 1000 of FIG. 10).

As noted above, the plies 1151 of the layer depicted in FIG. 10 are curved. Accordingly, FIG. 10 presents a composite tapered wing spar 1000, wherein respective longitudinal axes 999 of fibers making up a first layer at least substantially lying / extending on a plane that lies on the surface of the main web of the wing spar are curved over at least most of their lengths.

It is noted that in at least some embodiments of FIG. 11, the plies 1151 of the fiber layer depicted therein extend in a curve across the web 110 that has a substantially constant radius as the curve extends from the bottom flange 130 to the top flange 120. That said, in an alternate embodiment, the plies of the fiber layer extend in a curve across the web 110 that has a compound radius as the curve extends from the bottom flange 130 to the top flange 120. By way of example only and not by way of limitation, the curve could be elliptical or parabolic or any other type of curve that will enable the teachings detailed herein and variations thereof to be practiced. Indeed, in at least some embodiments, there can be straight portions of the ply between the bottom flange in the top flange. In some embodiments, the plies could meander. That is, relative to one longitudinal end of the spar (e.g., the shorter end - the side on the right of FIG. 10), the plies could have convex portions and concave portions (whereas the curves of the plies 1151 of FIG. 10 are all concave relative to one end of the spar and convex relative to another end of the spar). In some embodiments, the curvature exists over all of the length of the plies between the upper flange and the lower flange, while in some embodiments, the curvature exists over less than this amount (e.g., substantially all, most, etc.). Any type of curvature or trajectory of the plies 1151 that will result in the above-noted normal vector at the transition zones / at the spar can be used in at least some embodiments.

Accordingly, in view of FIG. 10, in an exemplary embodiment, the spar 1000 includes a first flange (upper flange or lower flange 120 / 130) having a first flange radius (122 / 123 / 132 / 133) connecting the main web 120 of the spar to the first flange. As with the above embodiments, the first flange extends along at least a part of the spar in a longitudinal span wise direction of the spar. The local direction of the longitudinal axis 999 of the fibers at the first flange radius making up the first layer is effectively 90 degrees relative to the general direction of extension of the first flange.

Accordingly, in an exemplary embodiment, the spar 1000 includes plies that are different than that of FIG. 9A and/or 9B in one or more aspects / that do not include one or more aspects of the plies of FIG. 9A and/or 9B (e.g., the skewed features, the oblique angle features relative to the flange directions, etc.).

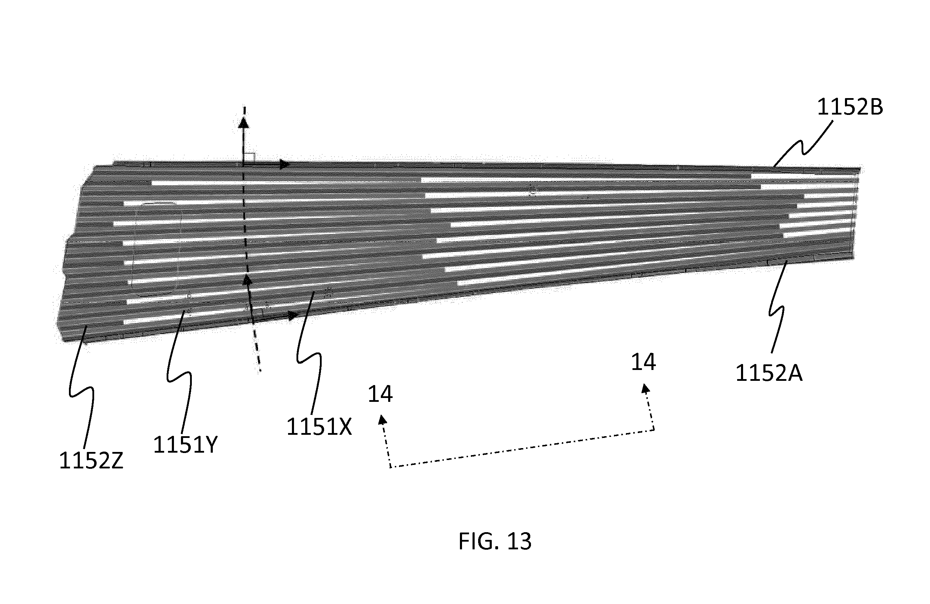

FIG. 13 depicts another layer of the spar 1000 (e.g., one of layers 111-114 of FIG. 5. More particularly, the layer depicted therein is layered directly and immediately over the first layer depicted in FIG. 10, although in alternate embodiments, this layer, or, more accurately, a layer having the fiber orientations of FIG. 13, can be located above and/or below a layer corresponding to that of FIG. 10. As can be seen, the plies of the second layer have respective longitudinal axes that are straight. A first ply 1152A of the plurality of plies is effectively parallel to directions of extensions of the bottom flange 130 at the respective transition zone of the bottom flange 130 and the web 110. A second ply 1152B of the plurality of plies is effectively parallel to directions of extensions of the upper flange 120 at the respective transition zone of the flange 120 and the web 110. Most (including all) plies of the plurality of plies located between the first ply1152A and the second ply 1152B extend at different respective oblique angles to one another and to the directions of extension of plies 1152A and 1152B. In an exemplary embodiment, the different respective oblique angles cumulatively results in the plies 1152A and 1152B having the aforementioned parallel features with respect to the respective flanges. In an exemplary embodiment, if the longitudinal axes of the respective plies were extrapolated out to the right with respect to the drawing of FIG. 13, the longitudinal axes would meet at about the same focus point. However, in an alternate embodiment, such extrapolated axes can meet in two or more focus points.

In an exemplary embodiment, the angles of the longitudinal axes of the plies relative to the direction of extension of the ply parallel to one of the flanges / direction of extension of the respective transition zone of the flange, corresponds to about the following equation:

$$\text{Angle (ply \#)} = (\text{Taper Angle}) \, (\text{Ply \# / Total Plies After Parallel Ply})$$

where "Angle (ply #)" corresponds to the angle of a ply having a number integerly increasing from a base ply (one of the plies that are parallel to the flanges - one of plies 1152A or 1152B), "Taper Angle" is the taper angle of the spar, "ply #" is the number of the ply as just noted, and "Total Plies After Parallel Ply" is the total number of plies not including the base ply (the parallel ply from which the angle is measured).

For example, if there are 20 plies after a given ply parallel to the flange / transition zone (which would correspond to 21 plies in total), and the taper angle is 8°, the angle of ply number 10 (counting from but not including the parallel ply (e.g., one of plies 1152A or 1152B), would be about 4°. The angle of ply number 20, which would correspond to the ply that is parallel to the other flange/other transition zone (e.g., if the ply parallel to the flange/transition zone was applied number 1152A, ply number 20 would be ply 1152B) would be about 8° (which includes 8°), corresponding to the taper angle of the spar, confirming the equation.

In at least some exemplary embodiments, the oblique angle between the plies depicted in figure 13 are the same. That said in an alternate embodiment, the oblique angle between the plies can be different, at least for some plys. Any arrangement that can enable the teachings detailed herein and or variations thereof to be practiced can utilize in at least some embodiments.

As can be seen, the plies of FIG. 13 are not all of the same length. Specifically, the plies of the second fiber layer depicted in FIG. 13 have first plies 1152X that extend a full length of the spar and second plies 1152Y and 1152Z that extend a partial length of the spar. In an exemplary embodiment of angling the fibers according to the arrangement of FIG. 13, the first and second plies are generally uniformly dispersed relative to location in the chord wise direction of the spar 1000 (top to bottom), as can be seen.

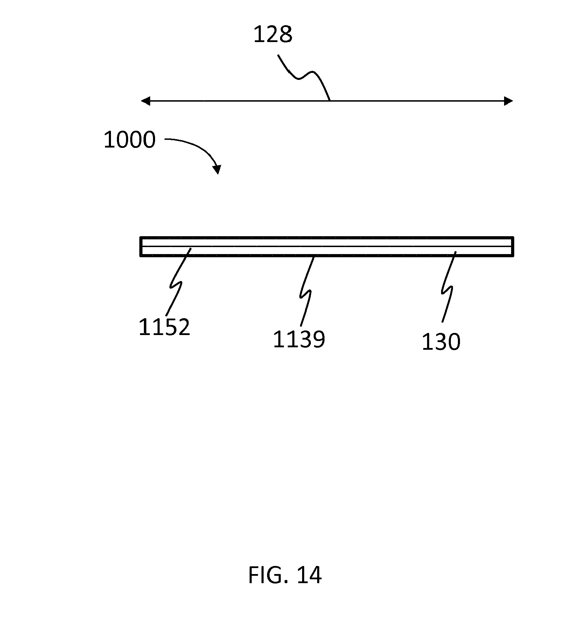

FIG. 14 depicts a conceptual view of a bottom view of a portion of the spar 1000 detailing some of the plies 1152 of FIG. 13. More specifically, FIG. 14 corresponds to FIG. 12, except for a different layer and depicts the bottom flange, where the rest of the spar is eclipsed by the bottom flange (the web is located at the top). In this regard, FIG. 14 is comparable to FIG. 12, save for the different orientation of the plies 1151 vs. plies 1152. FIG. 14 depicts the plies wrapping around the transition zone, albeit with the curvature of the ply corresponding to the lateral direction of the ply as opposed to the longitudinal direction. As can be seen, the plies 1152 extend parallel to the span wise direction of extension of the bottom flange 130 / the direction of extension of the edge 1139. Thus, the local direction of extension of the plies 1151 are effectively not skewed relative to the flange span wise direction of extension. It is noted that FIG. 14 conceptually represents the arrangement of the plies of the top spar (i.e., FIG. 14 also represents a top view of a portion of the spar 1000 of FIG. 13).

Accordingly, in view of FIG. 13, in an exemplary embodiment, spar 1000 includes a main web 110 and a first flange (top or bottom flange 120 / 130) having a first flange radius connecting the main web 110 to the first flange, the first flange extending along at least a part of the spar in a longitudinal span wise direction of the spar. Local directions of the longitudinal axes of the fibers at the first flange radius making up the first layer are about zero degrees relative to the general direction of extension of the first flange, and these fibers are curved.

Accordingly, in view of FIG. 13, in an exemplary embodiment, the spar 1000 includes plies that are different than that of FIG. 7 and/or 8 in one or more aspects / that do not include one or more aspects of the plies of FIG. 7 and/or 8.

In an exemplary embodiment, in view of FIG. 13, because the plies are almost parallel to one another and/or because the relative angle between the plies is minimal and/or effectively constant, and/or discontinuity between plies is generally uniformly dispersed, the strength of the zero degree layer is more evenly distributed relative to that which would be the case if the fibers were oriented on that layer according to FIG. 7 or FIG. 8 (where in FIG. 8, there is a zone of weakness 800 that generally runs parallel to line 159, as detailed above).

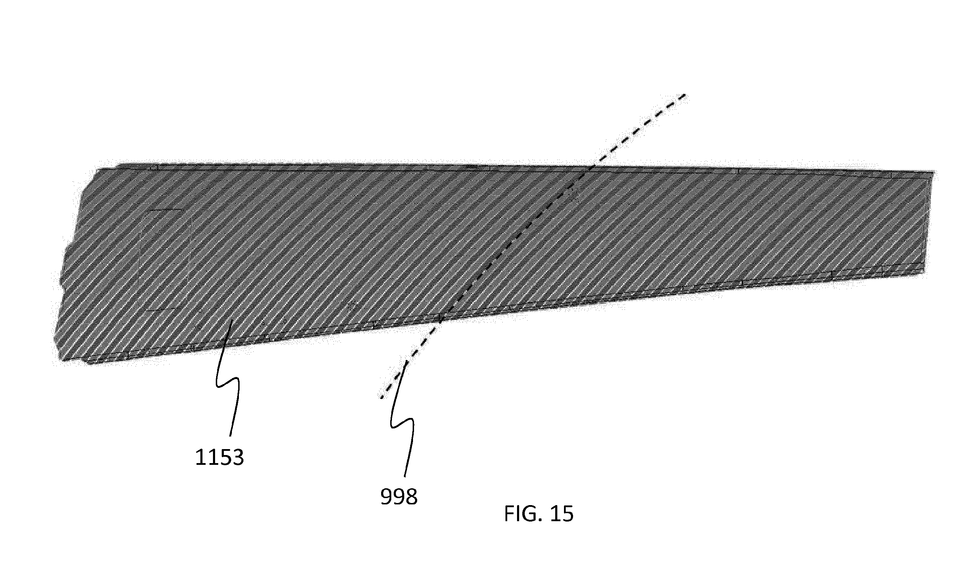

FIG. 15 depicts an alternate embodiment of a fiber layer which can be located above and/or below any of the other layers detailed herein. This layer corresponds to an "oblique angle" layer in that the general orientation of the fibers extended oblique angle relative to the longitudinal direction / span wise direction of the spar. In the embodiment depicted in FIG. 15, this layer corresponds to a 45° layer in that the general orientation of the fibers extend at about a 45° angle relative to the longitudinal direction/span wise direction of the spar. In FIG. 15, the fiber layer depicted therein is made up of oblique angle plies 1153 having local directional components that are oblique to respective local directional components of the plies of FIG. 10.

In the embodiment of FIG. 15, this feature is achieved by curving the plies 1153 in the plane of the web of the spar. In the exemplary embodiment depicted in FIG. 15, the plies 1153 have a longitudinal axis that follows the arc 998. In an exemplary embodiment, all of the plies of the layer depicted in FIG. 15 have longitudinal axes that follow the arc 998. In an exemplary embodiment, the arc 998 is a constant radius arc, while in alternate embodiments, the arc 998 is a compound curve (parabolic curve, elliptical curve etc.). Any curvature that can enable the teachings detailed herein and or variations thereof to be practiced can utilize in at least some embodiments.

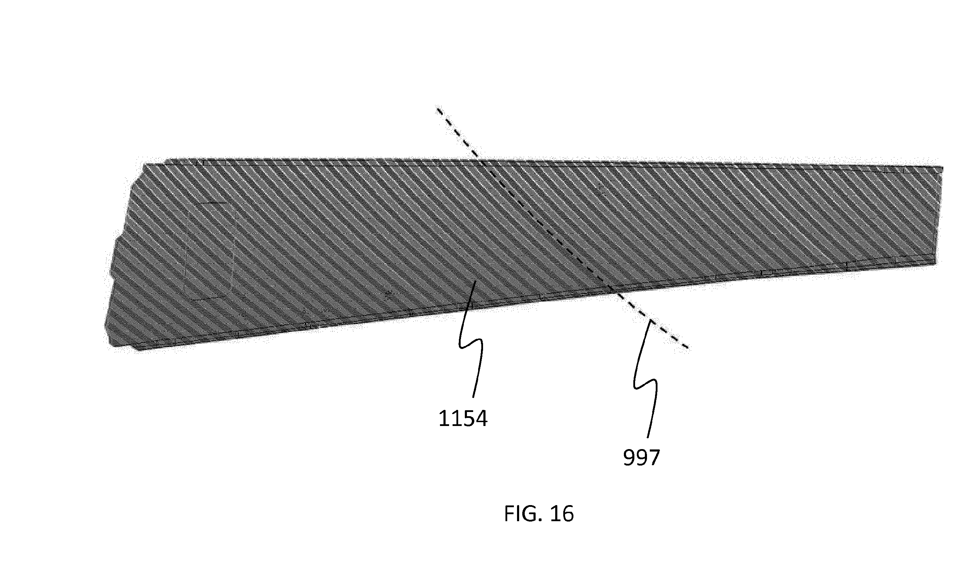

In the embodiment depicted in FIG. 15, the local directional components are, at substantially all local locations (including all locations) oblique to respective local directional components of the plies of FIG. 10 and/or FIG. 13 (and/or FIGs. 7, 8 and/or 9). In an exemplary embodiment, the oblique angle is 45° (or - 45°, as is depicted in FIG. 16 which depicts yet another layer that can be located above and/or below the layer of FIG. 10 and/or any other layer detailed herein and/or variations thereof, as will now be detailed).

FIG. 16 depicts yet another alternate embodiment of a fiber layer which can be located above and/or below any of the other layers detailed herein. This layer corresponds to an oblique angle" layer in that the general orientation of the fibers extended oblique angle relative to the longitudinal direction / span wise direction of the spar. In the embodiment depicted in FIG. 16, this layer corresponds to a -45° layer in that the general orientation of the fibers extend at about a -45 (or 135° angle) relative to the longitudinal direction/span wise direction of the spar. In FIG. 16, the fiber layer depicted therein is made up of oblique angle plies 1154 having local directional components that are oblique to respective local directional components of the plies of FIG. 10 and/or FIG. 13.

In the embodiment of FIG. 16, this feature is achieved by curving the plies 1156 in the plane of the web of the spar. In the exemplary embodiment depicted in FIG. 16, the plies 1154 have a longitudinal axis that follows the arc 997. In an exemplary embodiment, all of the plies of the layer depicted in FIG. 16 have longitudinal axes that follow the arc 997. In an exemplary embodiment, the arc 997 is a constant radius arc, while in alternate embodiments, the arc 997 is a compound curve (parabolic curve, elliptical curve etc.). Any curvature that can enable the teachings detailed herein and or variations thereof to be practiced can utilize in at least some embodiments.

In the embodiment depicted in FIG. 16, the local directional components are, at substantially all local locations (including all locations) oblique to respective local directional components of the plies of FIG. 10 and/or FIG. 13 (and/or FIGs. 7, 8 and/or 9A). In an exemplary embodiment, the oblique angle is -45°.

It is noted that in alternate embodiments, other oblique angles can be utilized in the oblique angle layers. That is, the longitudinal direction of the fibers of any particular layer can be angled at $\pm$ angle in a range of 0 to 90 in 0.1 degree increments (e.g., +10, -7.6, $\pm$ 43.9°,-89.0° to + 55.7°, etc.). In an exemplary embodiment, this can result in the relative angle of ply orientations between these layers and the layer corresponding to FIG. 10 being the same for substantially all locations.

In an exemplary embodiment, the orientations of plies 1153 / 1154 of FIGs. 15 and 16, which have respective longitudinal axes that are respectively parallel to arc 998 and arc 997, reduce the natural path skew around the flange radii as compared to oblique angle plies of the same general angle oriented to the general axis system used to orient the plies of FIGs. 7 and 9A.

Accordingly, in view of FIGs. 15 and/or 16, in an exemplary embodiment, spar 1000 includes a main web 110 and a first flange (top or bottom flange 120 / 130) having a first flange radius connecting the main web 110 to the first flange, the first flange extending along at least a part of the spar in a longitudinal span wise direction of the spar. Local directions of the longitudinal axes of the fibers at the first flange radius making up the first layer are about 45 degrees relative to the general direction of extension of the first flange, and these fibers are curved.

Accordingly, in an exemplary embodiment, there is an exemplary spar made up of a plurality of fiber layers. Referring to FIG. 5, a first layer 111 can correspond to the layer represented by FIG. 10, a second layer 112 can correspond to the layer represented by FIG. 13, a third layer 113 can correspond to the layer represented by FIG. 15, and a fourth layer 114 can correspond to the layer represented by FIG. 16. That said, in an alternate embodiment, the layers may be mixed up from this order. By way of example only and not by way of limitation, the first layer 111 can correspond to the layer represented by FIG. 10, the second layer 112 can correspond to the layer represented by FIG. 15 or by FIG. 16, the third layer 113 can correspond to the layer represented by FIG. 13, and the fourth layer 114 can correspond to the layer represented by the other of FIG. 15 or 16. In some embodiments, there can be fewer or additional layers. Any arrangement of layers that can enable the teachings detailed herein or variations thereof to be practiced in a structural component such as a spar can utilize in at least some embodiments. It is further noted that in at least some embodiments, the various layers of FIGs. 10 to 16 can be utilized with the various layers of FIGs. 7 to 9B. thus, in an exemplary embodiment, there is a spar that has a layer that includes plies that are different than that of one or more of FIGs. 7 to 9B in one or more aspects / that do not include one or more aspects of the plies of one or more of FIGs. 7-9B and a layer that includes plies that are the same as and/or include one or more aspects of the plies of one or more of FIGs. 7-9B.

In some exemplary embodiments, there is an exemplary method of manufacturing a composite tapered spar, as will now be detailed. In an exemplary embodiment, a first fiber layer is laid down in a manner such that a first component extends generally in a first plane (e.g., the plane of flange 120) and a second component extends generally in a second plane (e.g., the plane of web 110) and a third component extends generally in a third plane (e.g., the plane of flange 130). This layer is laid down such that a first transition zone exists between the first and second components and extends in at least a first generally linear manner. This layer is laid down also such that a second transition zone between the second and third components extends in at least a second generally linear manner in a different direction than the first generally linear manner. By way of example only and not by way of limitation, these transition zones can correspond to transition zones 123 and 133 detailed above.

The exemplary method further comprises steering plies of the fibers of the first layer to be, at the first transition zone 123, effectively normal to the direction of extension of the first transition zone 123 and to be, at the second transition zone 133, effectively normal to the direction of extension of the second transition zone 133. In an exemplary embodiment, the result of this method results in a ninety degree layer (e.g., the layer of FIG. 10).

In an exemplary embodiment, there is a method that is followed after the method just detailed or before the method just detailed (recognizing that the method just detailed will be executed afterwards, and thus the orientations that are keyed to the method above are still met), which entails laying down a plurality of fibers in a second layer above the first layer (although in alternate embodiments, this method can be performed prior to the methods detailed above, in which case the method detailed above entails laying down fibers over the layer created by executing this method) to form the composite spar. The second layer has a fourth component (corresponding to flange 120) that extends generally in the first plane and a fifth component (corresponding to web 110) that extends generally in the second plane and a sixth component (corresponding to flange 130) that extends generally in the third plane such that a third transition zone between the fourth and fifth components extends in at least the first generally linear manner and such that a fourth transition zone between the fifth and sixth components extends in at least the second generally linear manner. By way of example only and not by way of limitation, these third and fourth transition zones can correspond to transition zones 123 and 133 detailed above.

The method further comprises steering plies of the fibers of the second layer to be, at the third transition zone, effectively parallel to the direction of extension of the fourth transition zone and to be, at the fourth transition zone, effectively parallel to the direction of extension of the fourth transition zone. In an exemplary embodiment, the result of this method results in a zero degree layer (e.g., the layer of FIG. 13).

In an exemplary embodiment, there is a method that is followed after one or both of the methods just detailed, or before one or both of the methods just detailed (with orientations being established based on planned later execution of methods), which entails laying down a plurality of fibers in another layer above the first layer and/or above the second layer (although in alternate embodiments, this method can be performed prior to the methods detailed above, in which case the method detailed above entails laying down those layers above the layer established by this layer. The additional layer can include a component that extends generally in the first plane and a component that extends generally in the second plane and a component that extends generally in the third plane such that a respective transition zones are established. In this exemplary method, the method further comprises steering ± 45 degree plies of the fibers of the layer established by this method such that local directions of extensions of the fibers of this layer are about 45 degrees relative to the local directions of extensions of the fibers of the first layer or the second layer established by the above methods (or will be, if practiced prior to the establishment of such layers) for substantially all locations of the spar. In an exemplary embodiment, this layer is duplicated to achieve the aforementioned angular orientation for the other of the first or second layer.

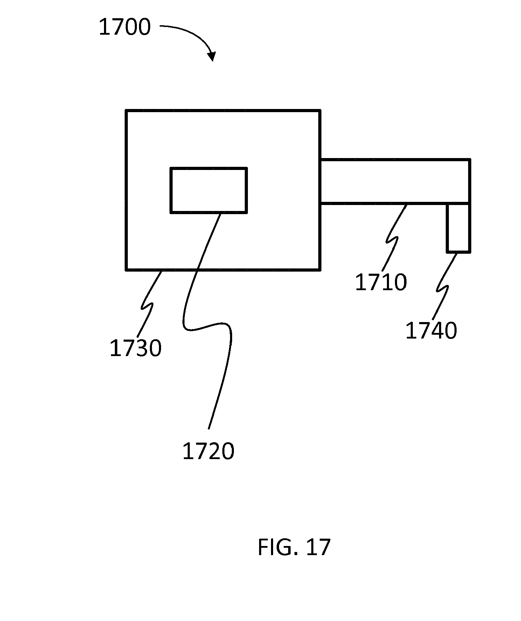

In an exemplary embodiment, one or more or all of the methods detailed above can be executed in an automated manner. By way of example only and not by way of limitation, one or more or all of the methods detailed above can be executed utilizing an AFP machine. Accordingly, in an exemplary embodiment, there is an AFP machine that is programmed to execute one or more or all of the methods detailed above. By way of example only and not by way of limitation, FIG. 17 depicts an exemplary device 1700 that includes a robotic device 1710 and a control unit 1720. The control unit 1720 is housed in a chassis 1730, and the robotic device 1710 is connected to / extends from the chassis 1730. The robotic device 1710 further includes a component 1740 that can correspond to a fiber applicator and/or a fiber manipulator. In an exemplary embodiment, the control unit is configured to control the device 1700 to execute one or more or all of the methods detailed herein and/or variations thereof. In an exemplary embodiment, this is achieved by the control unit controlling the robotic device 1710 to move the component 1740 to apply the fiber plies in the layers detailed herein.

It is noted that any method action detailed herein corresponds to a disclosure of a resulting product made by that method. It is further noted that any method actions detailed herein corresponds to a disclosure of an apparatus that is configured to automatically, in whole or in part, execute the method. In particular, any method detailed herein corresponds a disclosure of an apparatus having a control unit that is configured to control a robotic device to automatically, in whole or in part, execute the method.

In a similar vein, it is noted that any structure detailed herein corresponds to a disclosure of a method of making that structure, including automated methods of making that structure. It is further noted that any structure detailed herein corresponds to a disclosure of a apparatus configured to automatically in whole or in part make that structure.

Thus, in at least some embodiments, there is an aircraft, such as a commercial passenger aircraft, having tapered wings. In embodiment, this can correspond to aircraft 1 of FIG. 1, discussed above. In such an exemplary aircraft 1, the upper skin 26 and the lower skin 27 the wing 14 are not parallel in the span wise direction 99, and a composite spar, such as composite spar 1000, is present between the upper skin 26 and lower skin 27 of the wing 14. In an exemplary embodiment, the upper flange of the spar is connected, either directly or indirectly, to the upper surface of the wing, and the lower flange of the spar is connected, either directly or indirectly, to the lower surface of the wing. The angle of taper of the spar is about 8°, although in alternate embodiments, the angle of tapering can be greater than or less than 8°. Further, the spar can be a compound tapered spar, wherein a portion of the spar is tapered at a first angle and another portion of the spar is tapered at a second angle different from the first angle. In at least some exemplary embodiments (e.g., such as those utilizing the embodiments of FIGs. 10-16), utilizing the teachings detailed herein and or variations thereof, analytical and/or manufacturing difficulties for the spars manufactured utilizing woven fiber, unidirectional tape, slip tape and/or tow material, can be somewhat alleviated, at least relative to utilizing other embodiments (e.g., the embodiments of FIGs. 7-9B / embodiments where the plies of the layers are based on the general axis system, etc.). In an exemplary embodiment, by steering the fiber paths according to those detailed in FIGs. 10 to 16, the overall ply stack up that results is more closely related to the testing and analytical models that can be used to derive structural capability of the spar, at least relative to that which would be the case by steering the fiber paths according to those detailed in FIGs. 7 to 9B. This can have utility in that it can alter the ability to resist buckling (column buckling and/or panel buckling, etc.). This can have utility with respect to shear loading resistance (e.g., increased shear resistance). Also, embodiments can have utility with respect to reducing stress and/or strain concentrations at holes, corners, etc. All of this relative to that which would be the case in the absence of at least some of the teachings detailed herein.

By way of example only and not by way limitation, at least some of the teachings detailed herein enable the ply layup to be within defined parameters of the existing test data. In an exemplary embodiment, this can have utility in that it allows for an improved understanding of the strength behavior of the resulting spar, at least in spars utilizing the layers of FIGs. 10-16, relative to that which is the case with respect to embodiments utilizing the layers of FIGs. 7-9B. In an exemplary embodiment, the time and/or cost associated with producing a spar utilizing layers according to FIGs. 10-16 can be reduced relative to that associated with producing a comparable spar utilizing the layers according to FIGs. 7 to 9B. In an exemplary embodiment, the resulting weight of a spar utilizing layers according to FIGs. 10-16 can be reduced relative to that associated with producing a comparable spar utilizing the layers according to FIGs. 7 to 9B.

In an exemplary embodiment, steering the fibers of the ninety degree layer to be effectively normal to the upper and/or lower flange (e.g., according to FIG. 10) allows the fibers to follow their natural path at the flange radii. This can enable a flange to be constructed that can have increased fuel pressure loads, at least relative to that which would be the case in the absence of the teachings detailed herein.

In an exemplary embodiment, steering the fibers of the zero degree layer to be effectively parallel to the upper and lower flange (e.g., the orientation of FIG. 13) could allow the laying of continuous fibers over the flange radii, thereby reducing bulking issues and/or improving the spar flange for wing bending loads, at least relative to that which would be the case as compared to, by way of example only and not by way limitation, that resulting in practicing the fiber orientation of FIG. 7.

While various embodiments of the present invention have been described above, it should be understood that they have been presented by way of example only, and not limitation. It will be apparent to persons skilled in the relevant art that various changes in form and detail can be made therein without departing from the spirit and scope of the invention.

**Claims**

**1.** A structural component, comprising:

a composite tapered wing spar including a first fiber layer and a main web, wherein

respective longitudinal axes of fibers making up the first layer at least substantially lying on a plane corresponding to the main web of the wing spar are curved over at least most of the respective lengths of the fibers.

2. The structural component of claim 1, wherein the spar includes a first flange having a first flange radius connecting the main web of the spar to the first flange, the first flange extending along at least a part of the spar in a longitudinal direction of the spar, wherein local direction of the longitudinal axis of the fibers at the first flange radius making up the first layer is effectively o degrees, about 45 degrees or 90 degrees, relative to the general direction of extension of the first flange.

3. The structural component of claim 2, wherein the spar includes a second flange having a second flange radius connecting the main web to the second flange, the second flange extending along at least a part of the spar in the longitudinal direction of the spar, wherein local direction of the longitudinal axis of the fibers at the second flange radius making up the first layer is o degrees, about 45 degrees, or 90 degrees, relative to the general direction of extension of the second flange, wherein the direction of extension of the first flange is at a non-zero angle relative to the direction of extension of the second flange.

4. The structural component of any preceding claim, further comprising a second layer, wherein a longitudinal axis of fibers making up a second layer of the spar are curved, wherein local direction of the longitudinal axis of the fibers making up the second layer is about 90 degrees relative to respective local direction of the longitudinal axis of the fibers making up the first layer.

5. The structural component of any of claims 1 to 3, further comprising a second layer, wherein a longitudinal axis of fibers making up a second layer of the spar are straight, wherein local direction of the longitudinal axis of the fibers making up the second layer is about 45 degreesrelative to respective local direction of the longitudinal axis of the fibers making up the first layer.

6. A method of fabricating a composite structure, comprising:

laying down a plurality of fibers in a first layer to form a composite spar, wherein the first layer has a first component that extends generally in a first plane and a second component that extends generally in a second plane and a third component that extends generally in a third plane such that a first transition zone between the first and

second components extends in at least a first generally linear manner and such that a second transition zone between the second and third components extends in at least a second generally linear manner in a different direction than the first generally linear manner, wherein

the method further comprises steering plies of the fibers of the first layer to be, at the first transition zone, effectively normal to the direction of extension of the first transition zone and to be, at the second transition zone, effectively normal to the direction of extension of the second transition zone.

7. The method of claim 6, further comprising:

laying down a plurality of fibers in a second layer above the first layer to form the composite spar, wherein the second layer has a fourth component that extends generally in the first plane and a fifth component that extends generally in the second plane and a sixth component that extends generally in the third plane such that a third transition zone between the fourth and fifth components extends in at least the first generally linear manner and such that a fourth transition zone between the fifth and sixth components extends in at least the second generally linear manner, wherein

the method further comprises steering plies of the fibers of the second layer to be, at the third transition zone, effectively parallel to the direction of extension of the fourth transition zone and to be, at the fourth transition zone, effectively parallel to the direction of extension of the fourth transition zone.

8. The method of claim 6, further comprising:

laying down a plurality of fibers in a second layer above the first layer to form the composite spar, wherein the second layer has a fourth component that extends generally in the first plane and a fifth component that extends generally in the second plane and a sixth component that extends generally in the third plane such that a third transition zone between the fourth and fifth components extends in at least the first generally linear manner and such that a fourth transition zone between the fifth and
sixth components extends in at least the second generally linear manner, wherein
the method further comprises steering ± 45 degree plies of the fibers of the second layer such that local directions of extensions of the fibers of the second layer are about 45 degrees relative to the local directions of extensions of the fibers of the first layer for substantially all locations of the spar.

9.  The method of claim 8, further comprising:

laying down a plurality of fibers in a third layer above the first layer or the second layer to form the composite spar, wherein the third layer has a seventh component that extends generally in the first plane and an eighth component that extends generally in the second plane and a ninth component that extends generally in the third plane such that a fifth transition zone between the seventh and eighth components extends in at least the first generally linear manner and such that a sixth transition zone between the eighth and ninth components extends in at least the second generally linear manner, wherein
the method further comprises steering ± 45 degree plies of the fibers of the second layer such that local directions of extensions of the fibers of the second layer are about 45 degrees relative to the local directions of extensions of the fibers of the second layer for substantially all locations of the spar.

10.  The method of any of claims 6 to 9, wherein:

the second component corresponds to a body of the spar and the first and third components correspond to flanges of the spar.

11.  A structural component, comprising:

a composite tapered wing spar having a web and two flanges on opposite sides of the web, the composite tapered wing spar having a first fiber layer made up of a plurality of plies that are effectively normal to directions of extensions of the respective flanges at respective transition zones of the flanges and web, wherein the directions of extensions of the respective flanges are obliquely angled relative to one another.

12.  The structural component of claim 11, comprising:

the composite tapered wing spar having a second fiber layer made up of a plurality of plies, wherein the plies of the second layer have respective longitudinal axes that are straight, wherein a first ply of the plurality of plies of the second layer is effectively parallel to a respective direction of extension of one of the flanges at a first transition zone of the one flange and web, wherein a second ply of the plurality of plies of the second layer is effectively parallel to a respective direction of extension of the other of the flanges at a second transition zone of the other flange and web, and wherein most plies of the plurality of plies of the second layer located between the first ply and the second ply extend at respective oblique angles, or effectively the same oblique angle, relative to one another and to the direction of extension of the first ply and the second ply.

13.  The structural component of claim 11, wherein the wing spar has a second fiber layer made up of a plurality of plies, wherein the plies of the second fiber layer have first plies that extend a full length of the spar and second plies that extend a partial length of the spar, wherein the first and second plies are generally uniformly dispersed relative to location in the chord wise direction of the spar.

14.  The structural component of claim 11, wherein the plies of the first layer extend in a curve across the web from a first flange to the second flange.

15.  The structural component of claim 11, wherein the composite tapered wing spar has a second fiber layer made up of oblique angle plies having local directional components that are oblique to respective local directional components of the plies of the first layer.

16.  The structural component of claim 12, wherein the composite tapered wing spar has a third fiber layer made up of oblique degree plies having local directional components that are oblique to respective local directional components of the plies of the second layer.

17.  An aircraft, comprising:

a wing, including a wing spar corresponding to the structural component of claim 1 or claim 11.

FIG. 1

FIG. 2

FIG. 3

FIG. 4

110B

114

113

112

111

FIG. 5

FIG. 6

FIG. 7

EP 2 982 598 A2

FIG. 8

FIG. 9A

EP 2 982 598 A2

128

100

130

150    130    139

FIG. 9B

FIG. 10

FIG. 11

EP 2 982 598 A2

FIG. 12

FIG. 13

EP 2 982 598 A2

EP 2 982 598 A2

128

1000

1152    1139    130

FIG. 14

FIG. 15

998

1153

EP 2 982 598 A2

1154

997

FIG. 16

EP 2 982 598 A2

FIG. 17